# EUROPÄISCHE PATENTSCHRIFT

(11) **EP 3 264 319 B1**
(45) Veröffentlichungstag und Bekanntmachung des Hinweises auf die Patenterteilung: **20.02.2019**
(21) Anmeldenummer: 17177337.7
(22) Anmeldetag: 22.06.2017
(51) Int. Cl.: G06K 7/10, H01Q 1/22, H01Q 13/20

(54) **LESEVORRICHTUNG EINES IM UHF- ODER SHF-BEREICH- SENDENDEN UND EMPFANGENDEN TRANSPONDERSYSTEMS**
READING DEVICE OF A UHF OR SHF SENDING AND RECEIVING TRANSPONDER SYSTEM
DISPOSITIF DE LECTURE D'UN SYSTÈME DE TRANSPONDEUR ÉMETTEUR ET RÉCEPTEUR DE ZONE UHF OU SHF

(30) Priorität: 27.06.2016 DE 202016103378 U
(43) Veröffentlichungstag der Anmeldung: 03.01.2018
(73) Patentinhaber: ASTRA Gesellschaft für Asset Management mbH & Co. KG, 30890 Barsinghausen (DE)
(72) Erfinder: Stobbe, Anatoli, 30890 Barsinghausen (DE); Maaß, Norman, 30455 Hannover (DE)
(74) Vertreter: Patentanwälte Thömen & Körner

(56) Entgegenhaltungen:
- WO-A1-2005/109308
- WO-A1-2007/104339
- DE-A1-102006 053 987
- US-A1- 2010 060 457

## Beschreibung

Die Erfindung betrifft eine Lesevorrichtung eines im UHF- oder SHF-Bereich- sendenden und empfangenden Transpondersystems nach dem Oberbegriff des Anspruchs 1.

Aus der EP 2 743 892 A2 ist eine Vorrichtung zum Lagern von Gegenständen bekannt, die allseitig gegen den Austritt elektromagnetischer Felder abgeschirmt ist. Dadurch soll sichergestellt werden, dass mittels eines Lesegeräts und einer in der Vorrichtung angeordneten Leseantenne nur Transponder gelesen werden können, die sich im Inneren des umschlossenen Raums befinden und außerhalb des umschlossenen Raums befindliche Transponder ausgespart bleiben.

Das Dokument WO2005/109308 A1 zeigt eine Spulenkonstruktion zur Erzeugung eines magnetischen Lesefeldes. Durch Veränderung der magnetischen Felder werden die sich durch die Überlagerung ergebenden Nullstellen im Raum verschoben.

Um Transponderdaten schnell lesen zu können und so in kurzer Zeit eine Vielzahl von Transponder zu erfassen, wird eine hohe Datenrate für die Übertragung der Transponderdaten benötigt, was wiederum eine hohe Arbeitsfrequenz in den zugelassenen Frequenzbändern im UHF- und SHF-Bereich erfordert. Der Nutzung einer derartigen hohen Arbeitsfrequenz steht allerdings der Nachteil gegenüber, dass sich im emittierten elektromagnetischen Feld der Leseantenne durch Reflexionen an abschirmenden Flächen und daraus resultierenden Interferenzen Zonen geringer Feldstärke oder Null-Stellen ausbilden können, die eventuell eine Erkennung von statisch gelagerten Transpondern vereiteln. Als Zonen geringer Feldstärke gelten Orte im Inneren des umschlossenen Raumes, in denen die Feldstärke unterhalb eines Mindestwertes liegt, der noch für den Betrieb, nämlich die Energieversorgung und fehlerfreie Datenübertragung eines dort angeordneten seriengefertigten Transponders erforderlich wäre.

Zur Darstellung eines weitgehend homogenen räumlich begrenzten elektromagnetischen Feldes ist es bekannt, einen strahlenden Wellenleiter einzusetzen, entlang dessen Verlaufs eine etwa konstante Feldstärke herrscht, und diesen strahlenden Wellenleiter so zu verlegen, dass sein elektromagnetisches Feld den begrenzten Raum ausfüllt. Bei dieser Art der Antenne kann die elektromagnetische Feldstärke in der Nähe des strahlenden Wellenleiters geringer sein als bei einer konzentrierten Strahlungsquelle, deren Feldstärke mit der dritten Potenz ihres Abstandsmaßes vom Ort der Strahlungsquelle abnimmt.

Es hat sich gezeigt, dass es bei einer großen Anzahl von eng benachbarten Transpondern, wie sie zum Beispiel in einem Schlüsselschrank üblich ist, zu unerwünschten Effekten kommen kann. So wurde festgestellt, dass einzelne Transponder, die ursprünglich noch gelesen werden konnten, bei Hinzufügen weiterer Transponder nicht mehr lesbar waren.

Der Erfindung liegt die Aufgabe zu Grunde, eine Lesevorrichtung dahingehend zu verbessern, dass die Lesbarkeit von Transpondern unabhängig von deren Anzahl und Anordnung verbessert wird.

Diese Aufgabe wird bei einer Lesevorrichtung nach dem Oberbegriff des Anspruchs 1 durch die Merkmale dieses Anspruchs gelöst. Weiterbildungen und vorteilhafte Ausgestaltungen ergeben sich aus den Unteransprüchen.

Eine Erklärung für die unerwünschten Effekte, bei denen einzelne Transponder nicht mehr lesbar sind, wird darin gesehen, dass sich die Transponder im elektromagnetischen Feld des strahlenden Wellenleiters wie gekoppelte Schwingkreise verhalten und so eine Rückwirkung auf den strahlenden Wellenleiter ausüben, der zu einer Verstimmung und Fehlanpassung des Wellenleiters führen kann. Im Zuge dieser Verstimmung und Fehlanpassung bilden sich auf dem Wellenleiter Mantelwellen aus. Es wird ein Teil der im Wellenleiter vom Einspeiseanschluss bis zum Abschlussanschluss übertragenen elektromagnetischen Leistung abgestrahlt und in der Nähe des Wellenleiters entstehen durch Interferenzen Zonen geringer Feldstärke oder Null-Stellen im elektromagnetischen Feld, in denen die von einem dort befindlichen Transponder benötigte elektromagnetische Feldstärke nicht mehr für dessen Betrieb und Datenübertragung ausreicht. Durch Einbringen mehrerer Transponder in die Nähe des Wellenleiters können sich diese Zonen geringer Feldstärke oder Null-Stellen im elektromagnetischen Feld neu verteilen und so an Orten auftreten, an denen zuvor noch eine für den Betrieb und die fehlerfreie Datenübertragung des Transponders ausreichende elektromagnetische Feldstärke herrschte. Durch Umordnen der Transponder oder Hinzufügen noch weiterer Transponder kann es zu einer weiteren unterschiedlichen Verteilung der Zonen geringer Feldstärke oder Null-Stellen im elektromagnetischen Feld kommen, so dass auch die zuvor ausgeschiedenen Transponder jetzt wieder arbeiten können.

Diese Beobachtungen haben zu einem Lösungsansatz geführt, bei dem u. a. durch abwechselndes absichtliches weiteres Verstimmen der Anpassung zwischen der Impedanz des Lesegeräts und der Impedanz des Wellenleiters die durch Interferenzen entstehenden Zonen geringer Feldstärke oder Null-Stellen im elektromagnetischen Feld ihre Positionen verändern. So kann erreicht werden, dass bei wenigstens einer der Verstimmungspositionen keine Zone geringer Feldstärke oder Null-Stellen an der lokalen Position eines stationären Transponders auftritt und somit nach einem Zyklus aller Verstimmungspositionen auch alle Transponder wenigstens einmal gelesen werden können.

Erfindungsgemäß wird dies erreicht, indem Bauelemente des Lesegeräts und/oder mit dem Wellenleiter als Leseantenne gekoppelte Bauelemente, mittels denen die örtlichen Lagen von Zonen geringer Feldstärke oder Null-Stellen im elektromagnetischen Lesefeld verlagerbar oder deren Feldstärke erhöhbar sind, durch steuerbare Schalter ein- oder aus- oder umgeschaltet werden.

Gemäß mehrerer Ausführungsvarianten dieser Bauelemente können sie als schaltbare Abschlussimpedanzanordnung, als unterschiedlich angeordnete schaltbare Einspeiseanschlüsse oder als die Arbeitsfrequenz des Transpondersystems zwischen wenigstens zwei im selben oder benachbarten zulässigen Frequenzbereich liegenden Werten verändernde frequenzbestimmende Bauelemente eines Oszillators ausgeführt sein.

Durch eine Kombination zweier oder mehrerer Ausführungsvarianten können dabei weitere Verteilungen der Zonen geringer Feldstärke oder Null-Stellen im elektromagnetischen Feld erreicht werden und so die Wahrscheinlichkeit gesteigert werden, dass diese Zonen geringer Feldstärke oder Null-Stellen wenigstens bei einer der möglichen Verteilungen nicht stets an derselben Stelle auftreten.

Die schaltbaren Bauelemente können ohmsche und/oder induktive und/oder kapazitive Bauelemente sein, mittels denen der Impedanzwert des Lesegeräts und/oder der zyklisch- oder fernsteuerbaren Abschlussimpedanzanordnung gesteuert veränderbar ist.

Auf diese Weise werden verschiedene Einflussmöglichkeiten bereitgestellt, um eine Anpassung zwischen der Impedanz des strahlenden Wellenleiters einerseits und der Impedanz des Lesegeräts und/oder der Abschlussimpedanzanordnung andererseits zu verändern, um mögliche Zonen geringer Feldstärke oder Null-Stellen entlang des strahlenden Wellenleiters zuverlässig verschieben zu können.

Weiterhin können die schaltbaren Bauelemente als unterschiedlich angeordnete schaltbare Einspeiseanschlüsse ausgeführt sein.

Hierdurch wird die geometrische und elektrische Länge des strahlenden Wellenleiters verändert, wodurch ebenfalls eine örtliche Verlagerung möglicher Zonen geringer Feldstärke oder Null-Stellen stattfindet.

Auch ist es möglich, die schaltbaren Bauelemente als die Arbeitsfrequenz des Transpondersystems zwischen wenigstens zwei im selben oder benachbarten zulässigen Frequenzbereich liegenden Werten verändernde frequenzbestimmende Bauelemente eines Oszillators auszuführen.

Durch eine Änderung der Arbeitsfrequenz des Transpondersystems und gleichbleibender Länge des strahlenden Wellenleiters werden ebenfalls mögliche Zonen geringer Feldstärke oder Null-Stellen verlagert.

Gemäß einer praktischen Ausführung kann der strahlende Wellenleiter ein Schlitzkabel oder eine Streifenleitung aus wenigstens einer elektrisch leitfähigen Schicht auf einem elektrisch nichtleitfähigen Substrat sein.

Ein Schlitzkabel und eine Streifenleitung aus einem biegsamen Material bieten die Möglichkeit, nachträglich in einem bereits vorhandenen unabgeschirmten oder abgeschirmten Raum installiert zu werden. Dabei kann der Verlauf des Schlitzkabels und der Streifenleitung individuell der geometrischen Gestaltung der Wände und des Volumens des Raums angepasst werden, so dass im gesamten Raum überall eine ausreichende elektromagnetische Feldstärke herrscht, um Transponder betreiben und lesen zu können. Wenn die Sendeleistung des Lesegeräts nur so groß gewählt wird, dass ausschließlich in der Nähe des strahlenden Wellenleiters eine für die Energieversorgung und fehlerfreie Datenübertragung der Transponder ausreichende elektromagnetische Feldstärke herrscht, kann auf eine Abschirmung des umschlossenen Raums auch verzichtet werden. Der Wellenleiter muss dann aber im umschlossenen Raum so dicht oder konzentriert verlegt werden, dass der umschlossene Raum vollständig mit der für eine Energieversorgung und fehlerfreie Datenübertragung der Transponder ausreichenden elektromagnetischen Feldstärke ausgeleuchtet ist.

Eine Streifenleitung aus einem starren Material erfordert gegenüber der biegsamen Ausführung eine vorherige Planung seines Verlaufs, kann aber auch im Zuge der Herstellung der Wände integriert werden. Bei Ausführung einer Streifenleitung mit einer Masseschicht kann im Falle einer Abschirmung des Raums auch die Abschirmung konstruktiv in die Masseschicht einbezogen werden.

Soll an die Streifenleitung eine zyklisch- oder fernsteuerbare Abschlussimpedanzanordnung angeschlossen werden, sind für die Ausgestaltung der Streifenleitung wenigstens zwei leitfähige Schichten zweckmäßig. Eine der leitfähigen Schichten kann als Masseschicht auf der der ersten leitfähigen Schicht gegenüberliegenden Seite des nichtleitfähigen Substrats fest angeordnet sein. Alternativ kann es auch eine Fläche aus einem leitfähigen Material, zum Beispiel eine Abschirmung sein, auf der das Substrat mit der leitfähigen Schicht befestigt wird, wobei die leitfähige Schicht auf der der Abschirmung gegenüberliegenden Seite des nichtleitfähigen Substrats angebracht ist.

Weiterhin kann der strahlende Wellenleiter ein- oder mehrfach in seiner Ausrichtung wechselnd ein Flächengebilde nachbilden.

So ist es möglich, mit einem einzigen durchgehenden Wellenleiter auch größere Flächenbereiche zu erfassen und hochfrequenzmäßig so auszuleuchten, dass Transponder an allen vorgesehenen stationären Orten betrieben und gelesen werden können.

Die wenigstens eine leitfähige Schicht der Streifenleitung kann gleichzeitig eine erste Steuerleitung und/oder Speiseleitung der zyklisch- oder fernsteuerbaren Abschlussimpedanzanordnung sein und eine weitere Steuerleitung und/oder Speiseleitung der zyklisch- oder fernsteuerbaren Abschlussimpedanzanordnung kann aus einer weiteren leitfähigen Schicht oder Masseschicht der Streifenleitung oder einer leitfähigen Abschirmung oder Gehäusewand bestehen.

Hierdurch wird die Verlegung einer gesonderten Steuerleitung eingespart und durch den Anschluss des Lesegeräts und der Abschlussimpedanzanordnung an die Streifenleitung wird auch automatisch die zyklisch- oder fernsteuerbare Abschlussimpedanzanordnung mit einer Steuervorrichtung des Lesegeräts verbunden. Der Zeit- und Materialaufwand für die Installation wird so reduziert.

Bei der Ausführung der schaltbaren Abschlussimpedanz kann zwischen drei unterschiedlichen Impedanzwerten, nämlich Kurzschluss, also Null Ohm, dem Impedanzwert des Wellenleiters und offen, also unendlich Ohm umgeschaltet werden.

So lässt sich mit gerade drei unterschiedlichen Impedanzwerten der maximal mögliche Variationsbereich der Impedanzänderungen abdecken.

Mittels einer Überwachungs- und Steuervorrichtung können fehlerfreie und fehlerhafte Lesevorgänge des Lesegeräts erfasst werden und nach fehlerfreien Lesevorgängen der Schaltzustand der schaltbaren Bauelemente unverändert belassen werden, während er nach wenigstens einem fehlerhaften Lesevorgang verändert wird.

Da stets nur ein Transponder zurzeit gelesen werden kann, erfolgt ein serielles Lesen der im Lesefeld vorhandenen lesbaren Transponder, indem nach Aufforderung einer der Transponder mit der Datenübertragung beginnt und nach Empfang der Daten abgeschaltet wird. Nach einem vollständigen fehlerfreien Lesen eines Transponders werden noch nicht gelesene Transponder zum Senden aufgefordert. Sofern auf diese Aufforderung Transponder reagieren, können zunächst die Einstellungen und Schaltzustände der schaltbaren Bauelemente im gegenwärtigen Zustand belassen werden. Wenn keine Reaktion mehr erfolgt, kann das bedeuten, dass keine ungelesenen Transponder mehr im Lesefeld vorhanden sind oder dass ungelesene Transponder sich an Stellen geringer Feldstärke oder Null-Stellen befinden. Es ist in dieser Situation keine Unterscheidung möglich, welcher der vorgenannte Fälle vorliegt. Das ist aber auch nicht nötig. Da immer die Möglichkeit besteht, dass ungelesene Transponder vorhanden oder hinzugekommen sind, wird nach einer unbeantworteten Aufforderung der Transponder zum Senden stets der Schaltzustand der schaltbaren Bauelemente geändert und dann erneut Transponder zum Senden aufgefordert. Antworten darauf hin wieder Transponder, die bisher nicht gelesen wurden, so werden auch diese seriell unter Beibehaltung des Schaltzustands der schaltbaren Bauelemente gelesen und der Schaltzustand erst dann geändert, wenn wieder keine Transponder mehr antworten. Auf diese Weise wird nach Durchlaufen aller möglicher Schaltvarianten mit hoher Wahrscheinlichkeit erreicht, dass irgendwann alle im Raum befindlichen Transponder gelesen wurden.

Nachfolgend wird die Erfindung anhand eines Ausführungsbeispiels erläutert, das in der Zeichnung dargestellt ist. In der Zeichnung zeigen:
- Fig. 1: eine schematische Darstellung eines Lesegeräts mit einer Draufsicht auf eine Streifenleitung als Leseantenne an einer abschirmenden Fläche und
- Fig. 2: einen Querschnitt durch einen Teil der als Streifenleitung ausgebildeten Leseantenne.

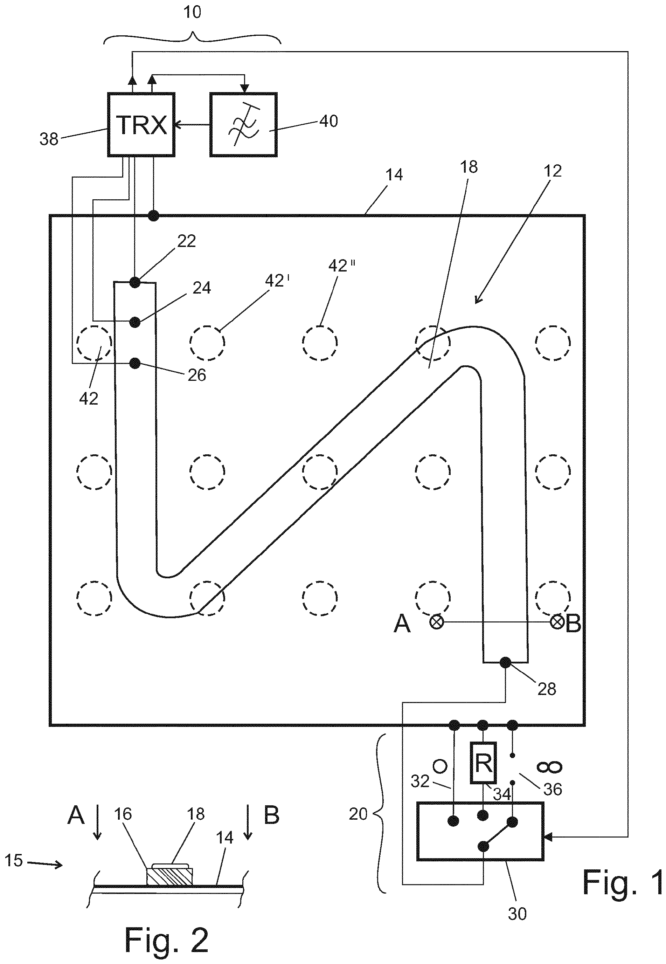

Fig. 1 zeigt eine schematische Darstellung eines Lesegeräts 10 mit einer Leseantenne und einer Abschlussimpedanzanordnung 20. Die Leseantenne ist als strahlender Wellenleiter 12 ausgeführt und der Aufbau des strahlenden Wellenleiters 12 in Fig. 2 als Querschnitt an der Schnittlinie AB nach Fig. 1 beschrieben. Die abschirmende Fläche 14 hat die Form eines Rechtecks und besteht aus einem elektrisch leitfähigen Material, zum Beispiel einer Metallplatte.

Der strahlende Wellenleiter 12 ist nach Fig. 2 als Streifenleitung 15 ausgeführt und umfasst ein elektrisch nichtleitfähiges Substrat 16 als Dielektrikum mit einer elektrisch leitfähigen Schicht 18 als erste leitfähige Schicht und einer abschirmenden Fläche 14 als zweite leitfähige Schicht. Die elektrisch leitfähige Schicht 18 kann eine bandförmige oder streifenförmige Fläche aus einem elektrisch leitenden Material z. B. Voll- oder Schaumpolyethylen, sein. Dabei bilden die elektrisch leitfähige Schicht 18 und das elektrisch nichtleitfähige Substrat 16 eine Einheit, die auf der abschirmenden Fläche 14 z. B. durch Klebung befestigt ist. Die abschirmende Fläche 14 erfüllt somit mehrere Aufgaben, nämlich als Abschirmung einerseits und als Massefläche der Streifenleitung 15 andererseits. Zusätzlich kann sie auch Bestandteil einer Speiseleitung für die Energieversorgung oder Steuerleitung zur Übermittlung von Steuersignalen zwischen einer Steuervorrichtung des Lesegeräts 10 und einer fernsteuerbaren Abschlussimpedanzanordnung 20 sein.

Gemäß Fig. 1 weist der strahlende Wellenleiter 12 auf einer Seite wenigstens einen ersten Speiseanschluss 22 auf, der mit dem Lesegerät 10 gekoppelt ist, und auf der anderen Seite einen Abschlussanschluss 28, der mit einer Abschlussimpedanzanordnung 20 gekoppelt ist. Bei der dargestellten Ausführungsform sind drei schaltbare Speiseanschlüsse 22, 24, 26 vorhanden, von denen einer direkt am Anfang des strahlenden Wellenleiters 12 angeordnet ist und zwei weitere jeweils im weiteren Verlauf des strahlenden Wellenleiters 12 mit unterschiedlichem Abstand zum ersten Speiseanschluss 22.

Der strahlende Wellenleiter 12 verläuft zunächst mit Abstand zu den Kanten der abschirmenden Fläche 14 auf der linken Seite von oben nach unten, knickt anschließend ab, verläuft dann diagonal von links unten nach rechts oben, worauf er abermals abgeknickt und auf der rechten Seite von oben nach unten verläuft und unten endet. Das untere Ende ist gleichzeitig der Abschlussanschluss 28, der mit der Abschlussimpedanzanordnung 20 gekoppelt ist. Die Abschlussimpedanzanordnung 20 umfasst hier einen Schalter 30, der von einem Sender/Empfänger mit Steuervorrichtung 38 des Lesegeräts 10 gesteuert ist und den Abschlussanschluss 28 wechselnd über drei unterschiedliche Impedanzen 32, 34, 36 mit der abschirmenden Fläche 14 verbindet. Die drei unterschiedlichen Impedanzen 32, 34, 36 sind Kurzschluss, also Null Ohm, Wellenleiterimpedanz, zum Beispiel 50 Ohm und offen, also unendlich Ohm.

Vor der abschirmenden Fläche 14 sind Transponder 42, 42', 42" gestrichelt angedeutet, die dort in nicht dargestellten stationären Halterungen angeordnet sein können. Die stationären Halterungen und damit die Transponder 42, 42', 42" haben zwar unterschiedliche Abstände vom strahlenden Wellenleiter 12, der Verlauf des strahlenden Wellenleiters 12 in Verbindung mit der Sendeleistung ist jedoch so gewählt, dass auch die am weitesten vom strahlenden Wellenleiter 12 entfernt angeordneten Transponder noch mit einer ausreichenden Sendeleistung und Feldstärke des elektromagnetischen Feldes versorgt werden.

Um durch Interferenzen entstehende Zonen geringer Feldstärke oder Null-Stellen des elektromagnetischen Feldes zu verschieben, kann die Abschlussimpedanzanordnung 20 zwischen den möglichen Werten umgeschaltet werden, die Einspeiseanschlüsse 22, 24, 26 umgeschaltet werden und die Arbeitsfrequenz eines frequenzbestimmenden Oszillators 40 des Lesegeräts 10 umgeschaltet werden. Anstelle der extern gezeichneten Steuerleitung zwischen dem Sender/Empfänger mit Steuervorrichtung 38 und dem Schalter der fernsteuerbaren Abschlussimpedanzanordnung 20 kann die Steuerung auch über die elektrisch leitfähige Schicht 18 des als Streifenleitung 15 ausgeführten strahlenden Wellenleiters 12 vorgenommen werden. In diesem Fall wäre zwischen dem Lesegerät 10 und dem strahlenden Wellenleiter 12 einerseits sowie zwischen dem strahlenden Wellenleiter 12 und der ferngesteuerten Abschlussimpedanzanordnung 20 noch jeweils eine hier nicht dargestellte Frequenzweiche zu ergänzen, die die Speiseenergie für die Abschlussimpedanzanordnung 20 und die erforderlichen Steuersignale von den Sende- und Empfangssignalen des Lesegeräts bezüglich der Transponder trennt.

Mit konstruktiv einfachen Verbindungsmitteln, zum Beispiel Krimp- oder Klemmverbindungen, zwischen dem Lesegerät 10 und dem strahlenden Wellenleiter 12 einerseits und dem strahlenden Wellenleiter 12 und der fernsteuerbaren Abschlussimpedanzanordnung 20 kann die Installation nach den baulichen Erfordernissen eines zu versorgenden Raums der Lesevorrichtung auch vom Anwender selbst nach einer Anleitung hergestellt werden. Dabei kann der strahlende Wellenleiter als Meterware zur Verfügung gestellt und entsprechend den Erfordernissen auf Länge zugeschnitten werden. Anschließend sind nur noch die Verbindungen zum Lesegerät 10 und zur Abschlussimpedanzanordnung 20 mithilfe der Verbindungsmittel herzustellen.

Durch die beschriebenen Umschaltmaßnahmen werden verschiedene Mantelwellen mit unterschiedlichen Phasenlagen ausgebildet. So werden durch Interferenzen gebildete Zonen geringer Feldstärke oder Null-Stellen gezielt entlang der Streifenleitung verschoben, so dass mit hoher Wahrscheinlichkeit an allen Orten, an denen stationäre Transponder angeordnet sind oder sein können, wenigstens einmal während der Lesezyklen keine Zonen geringer Feldstärke oder Null-Stellen auftreten und damit sämtliche vorhandenen Transponder betrieben und gelesen werden können.

### Bezugszeichenliste:

- 10: Lesegerät
- 12: strahlender Wellenleiter
- 14: abschirmende bzw. reflektierende Fläche
- 15: Streifenleitung
- 16: elektrisch nichtleitfähiges Substrat als Dielektrikum
- 18: elektrisch leitfähige Schicht
- 20: Abschlussimpedanzanordnung
- 22: erster Einspeiseanschluss
- 24: zweiter Einspeiseanschluss
- 26: dritter Einspeiseanschluss
- 28: Abschlussanschluss
- 30: Schalter
- 32: Null Ohm Impedanz
- 34: Wellenleiterimpedanz
- 36: unendlich Ohm Impedanz
- 38: Sender/Empfänger mit Steuervorrichtung
- 40: Oszillator

## Patentansprüche

1. Lesevorrichtung eines im UHF- oder SHF-Bereich- sendenden und empfangenden Transpondersystems, welches aus einer Lesevorrichtung mit einem Lesegerät (10), und einer Leseantenne sowie aus einer Mehrzahl von passiven Transpondern besteht, wobei die Leseantenne als mit dem Lesegerät (10) gekoppelter strahlender Wellenleiter (12) ausgebildet ist, in dessen Nähe ein für eine fehlerfreie Datenübertragung zwischen dem Lesegerät (10) und den Transpondern ausreichend starkes Lesefeld erzeugbar ist, **dadurch gekennzeichnet, dass** der strahlende Wellenleiter (12) einen mit dem Lesegerät (10) gekoppelten Einspeiseanschluss (22, 24, 26) sowie einen mit einer Abschlussimpedanzanordnung (20) gekoppelten Abschlussanschluss (28) aufweist, und dass Bauelemente des Lesegeräts (10) und/oder des Einspeiseanschluss (22, 24, 26) und/oder der Abschlussimpedanzanordnung (20), mittels denen die örtlichen Lagen von Zonen geringer Feldstärke oder Null-Stellen im elektromagnetischen Lesefeld verlagerbar oder deren Feldstärke erhöhbar sind, durch zyklisch- oder fernsteuerbare Schalter (30) ein- oder aus- oder umgeschaltet werden.

2. Lesevorrichtung nach Anspruch 1, **dadurch gekennzeichnet, dass** die schaltbaren Bauelemente ohmsche und/oder induktive und/oder kapazitive Bauelemente sind, mittels denen der Impedanzwert des Lesegeräts (10) und/oder der zyklisch- oder fernsteuerbaren Abschlussimpedanzanordnung (20) gesteuert veränderbar ist.

3. Lesevorrichtung nach Anspruch 1, **dadurch gekennzeichnet, dass** der Einspeiseanschluss mehrfach vorhanden und jeder dieser Einspeiseanschlüsse (22, 24, 26) unterschiedlich angeordnet ist und dass die schaltbaren Bauelemente als unterschiedlich angeordnete schaltbare Einspeiseanschlüsse (22, 24, 26) ausgeführt sind.

4. Lesevorrichtung nach Anspruch 1, **dadurch gekennzeichnet, dass** die schaltbaren Bauelemente als die Arbeitsfrequenz des Transpondersystems zwischen wenigstens zwei im selben oder benachbarten zulässigen Frequenzbereich liegenden Werten verändernde frequenzbestimmende Bauelemente eines Oszillators (40) ausgeführt sind.

5. Lesevorrichtung nach einem der Ansprüche 1 bis 4, **dadurch gekennzeichnet, dass** der strahlende Wellenleiter (12) ein Schlitzkabel ist oder eine Streifenleitung (15) aus wenigstens einer elektrisch leitfähigen Schicht auf einem elektrisch nichtleitfähigen Substrat ist.

6. Lesevorrichtung nach Anspruch 5, **dadurch gekennzeichnet, dass** der strahlende Wellenleiter ein- oder mehrfach in seiner Ausrichtung wechselnd angeordnet ist.

7. Lesevorrichtung nach Anspruch 5 oder 6, **dadurch gekennzeichnet, dass** die wenigstens eine leitfähige Schicht der Streifenleitung gleichzeitig eine erste Steuerleitung und/oder Speiseleitung der zyklisch- oder fernsteuerbaren Abschlussimpedanzanordnung (20) ist und eine weitere Steuerleitung und/oder Speiseleitung der zyklisch- oder fernsteuerbaren Abschlussimpedanzanordnung (20) aus einer weiteren leitfähigen Schicht oder Masseschicht der Streifenleitung oder einer leitfähigen Abschirmung oder Gehäusewand besteht.

8. Lesevorrichtung nach einem der Ansprüche 1 bis 7, **dadurch gekennzeichnet, dass** die schaltbare Abschlussimpedanzanordnung (20) zwischen drei unterschiedlichen Impedanzwerten, nämlich Kurzschluss, also Null Ohm (32), dem Impedanzwert des Wellenleiters (34) und offen, also unendlich Ohm (36) umgeschaltet wird.

9. Lesevorrichtung nach einem der Ansprüche 1 bis 8, **dadurch gekennzeichnet, dass** mittels einer Überwachungs- und Steuervorrichtung fehlerfreie und fehlerhafte Lesevorgänge des Lesegeräts erfassbar sind und nach fehlerfreien Lesevorgängen der Schaltzustand der schaltbaren Bauelemente unverändert belassen ist, während er nach wenigstens einem fehlerhaften Lesevorgang veränderbar ist.

## Claims

1. Reading device of a transponder system sending and receiving in the UHF or SHF range, which transponder system consists of a reading device having a reader (10), and a reader antenna, and of a multiplicity of passive transponders, wherein the reader antenna is configured as a radiating waveguide (12) coupled to the reader (10) and in the vicinity of which a reading field that is strong enough for error-free data transmission between the reader (10) and the transponders is able to be produced, **characterized in that** the radiating waveguide (12) has an input connection (22, 24, 26) coupled to the reader (10) and a terminating connection (28) coupled to a terminating impedance arrangement (20), and **in that** components of the reader (10) and/or of the input connection (22, 24, 26) and/or of the terminating impedance arrangement (20), by way of which components the spatial positions of areas of low field strength or zero points in the electromagnetic reading field are able to be moved or their field strengths are able to be increased, are switched on or switched off or switched by cyclically or remotely controllable switches (30).

2. Reading device according to Claim 1, **characterized in that** the switchable components are resistive and/or inductive and/or capacitive components by way of which the impedance value of the reader (10) and/or of the cyclically or remotely controllable terminating impedance arrangement (20) is able to be changed in a controlled manner.

3. Reading device according to Claim 1, **characterized in that** the input connection is present a plurality of times and each of these input connections (22, 24, 26) is arranged differently and **in that** the switchable components are configured as differently arranged switchable input connections (22, 24, 26).

4. Reading device according to Claim 1, **characterized in that** the switchable components are configured as frequency-determining components of an oscillator (40) that change the operating frequency of the transponder system between at least two values that lie in the same or adjacent permissible frequency ranges.

5. Reading device according to one of Claims 1 to 4, **characterized in that** the radiating waveguide (12) is a leaky feeder or a strip line (15) consisting of at least one electrically conductive layer on an electrically nonconductive substrate.

6. Reading device according to Claim 5, **characterized in that** the radiating waveguide is arranged so as to alternate one or more times in terms of its alignment.

7. Reading device according to Claim 5 or 6, **characterized in that** the at least one conductive layer of the strip line is simultaneously a first control line and/or feed line of the cyclically or remotely controllable terminating impedance arrangement (20) and a further control line and/or feed line of the cyclically or remotely controllable terminating impedance arrangement (20) consists of a further conductive layer or ground layer of the strip line or a conductive screen or housing wall.

8. Reading device according to one of Claims 1 to 7, **characterized in that** the switchable terminating impedance arrangement (20) is switched between three different impedance values, namely short circuit, i.e. zero resistance (32), the impedance value of the waveguide (34), and open, i.e. infinite resistance (36) .

9. Reading device according to one of Claims 1 to 8, **characterized in that** error-free and erroneous reading procedures of the reader are able to be detected by way of a monitoring and control device and, following error-free reading procedures, the switching state of the switchable components is left unchanged, whereas it is able to be changed after at least one erroneous reading procedure.

## Revendications

1. Dispositif de lecture d'un système de transpondeur émetteur et récepteur dans la gamme UHF ou SHF, qui se compose d'un dispositif de lecture comprenant un appareil de lecture (10) et une antenne de lecture, et d'une pluralité de transpondeurs passifs, dans lequel l'antenne de lecture est réalisée sous la forme d'un guide d'ondes rayonnant (12) couplé à l'appareil de lecture (10) et à proximité duquel un champ de lecture suffisamment intense peut être généré pour une transmission non erronée de données entre l'appareil de lecture (10) et les transpondeurs, **caractérisé en ce que** le guide d'ondes rayonnant (12) comporte une borne d'alimentation (22, 24, 26) couplée à l'appareil de lecture (10) et une borne de terminaison (28) couplée à un système d'impédance de terminaison (20), et **en ce que** des composants de l'appareil de lecture (10) et/ou de la borne d'alimentation (22, 24, 26) et/ou du système d'impédance de terminaison (20), au moyen desquels les positions spatiales de zones de faible intensité ou les points où le champ de lecture électromagnétique est nul peuvent être décalés ou leurs intensités de champ peuvent être accrues, sont activés ou désactivés ou commutés par des commutateurs (30) pouvant être commandés cycliquement ou à distance.

2. Dispositif de lecture selon la revendication 1, **caractérisé en ce que** les composants commutables sont des composants ohmiques et/ou inductifs et/ou capacitifs au moyen desquels la valeur d'impédance de l'appareil de lecture (10) et/ou du système d'impédance de terminaison (20) commandé cycliquement ou à distance, peut être modifiée de manière commandée.

3. Dispositif de lecture selon la revendication 1, **caractérisé en ce que** la borne d'alimentation est présente en plusieurs exemplaires et chacune de ces bornes d'alimentation (22, 24, 26) est disposée différemment, et **en ce que** les composants commutables sont réalisés sous la forme de bornes d'alimentation (22, 24, 26) commutables disposées différemment.

4. Dispositif de lecture selon la revendication 1, **caractérisé en ce que** les composants commutables sont réalisés sous la forme de composants d'un oscillateur (40) qui agissent sur la fréquence et qui modifient la fréquence de fonctionnement du système de transpondeur entre au moins deux valeurs situées dans des plages de fréquences admissibles identiques ou voisines.

5. Dispositif de lecture selon l'une quelconque des revendications 1 à 4, **caractérisé en ce que** le guide d'ondes rayonnant (12) est un câble à fentes ou est une ligne à rubans (15) constituée d'au moins une couche électriquement conductrice sur un substrat électriquement non conducteur.

6. Dispositif de lecture selon la revendication 5, **caractérisé en ce que** le guide d'ondes rayonnant est disposé de manière à ce que son orientation alterne une ou plusieurs fois.

7. Dispositif de lecture selon la revendication 5 ou 6, **caractérisé en ce que** l'au moins une couche conductrice de la ligne à rubans est simultanément une première ligne de commande et/ou une ligne d'alimentation du système d'impédance de terminaison (20) pouvant être commandé cycliquement ou à distance et **en ce qu'**une autre ligne de commande et/ou d'alimentation du système d'impédance de terminaison (20) pouvant être commandé cycliquement ou à distance est constituée d'une autre couche conductrice ou couche de masse de la ligne à rubans ou d'un blindage conducteur ou d'une paroi de boîtier.

8. Dispositif de lecture selon l'une quelconque des revendications 1 à 7, **caractérisé en ce que** le système d'impédance de terminaison (20) commutable est commuté entre trois valeurs d'impédance différentes, à savoir court-circuité, c'est-à-dire à zéro ohm (32), à la valeur d'impédance du guide d'ondes (34) et ouvert, c'est-à-dire à une valeur ohmique infinie (36).

9. Dispositif de lecture selon l'une quelconque des revendications 1 à 8, **caractérisé en ce que** des processus de lecture non erronés et erronés de l'appareil de lecture peuvent être détectés au moyen d'un dispositif de surveillance et de commande et **en ce qu'**après des processus de lecture non erronés, l'état de commutation des composants commutables est laissé inchangé alors qu'il peut être modifié après au moins un processus de lecture erroné.
